# EUROPÄISCHE PATENTSCHRIFT

(11) **EP 1 874 529 B1**
(45) Veröffentlichungstag und Bekanntmachung des Hinweises auf die Patenterteilung: **08.03.2017**
(21) Anmeldenummer: 06708792.4
(22) Anmeldetag: 17.03.2006
(51) Int. Cl.: B30B 11/20, B30B 11/08, A23G 3/02, A23G 3/20

(54) **VORRICHTUNG ZUM FORMEN VON AUS EINEM MASSESTRANG GEFERTIGTEN WAREN**
SHAPING DEVICE FOR PRODUCING GOODS FROM A MATERIAL STRAND
DISPOSITIF POUR FORMER DES PRODUITS A PARTIR D'UN BOUDIN DE MATIERE

(30) Priorität: 19.04.2005 DE 102005018077
(43) Veröffentlichungstag der Anmeldung: 09.01.2008
(73) Patentinhaber: ROBERT BOSCH GMBH, 70442 Stuttgart (DE)
(72) Erfinder: HORNSCHUCH, Stephan, 41238 Moenchengladbach (DE); FUCHS, Joachim, 40723 Hilden (DE)
(86) Internationale Anmeldenummer: PCT/EP2006/060818
(87) Internationale Veröffentlichungsnummer: WO 2006/111442

(56) Entgegenhaltungen:
- DE-A1- 1 627 903
- DE-A1- 2 920 814
- DE-B- 1 180 234
- DE-C- 565 952
- FR-A- 1 138 867
- FR-A- 1 166 245
- FR-A- 1 442 374
- GB-A- 1 398 798
- US-A- 1 920 445
- US-A- 2 865 311
- US-A- 4 025 270
- US-A1- 2002 192 330

## Beschreibung

### Stand der Technik

Die Erfindung betrifft eine Vorrichtung zum Formen von aus einem Massestrang gefertigten Waren, insbesondere bonbonartigen Süßwaren, nach der im Oberbegriff des Patentanspruches 1 näher definierten Art.

Eine derartige Vorrichtung ist aus der DE 29 14 967 C2 bekannt. Diese bekannte Vorrichtung zum Formen von Bonbons oder dergleichen aus einem Massestrang weist einen umlaufenden Prägekammerring mit parallel zu dessen Drehachse beidseitig offenen Prägekammern und mit den Prägekammern fluchtend zugeordnete Prägestempelpaare auf, deren Stempel gegenläufig in die zugehörige Prägekammer verschiebbar sind.

Seitlich des Prägekammerringes sind zwei zueinander exzentrisch umlaufende, sich aufeinander abwälzende Trennringe vorgesehen, deren jeder mit messerartigen Trennstegen und mit dazwischen ausgebildeten Halbformmulden auf seiner dem anderen zugekehrten Umfangseite versehen ist, wobei die Halbformmulden eines der Trennringe gleichachsig mit den Prägekammern des Prägekammerrings ausgerichtet sind. Die Trennstege dienen zum Abtrennen von Einzelstücken von dem Massestrang. Das Abtrennen erfolgt dabei bei einer Annäherung der beiden Trennringe während ihres Umlaufs, wobei der Massestrang zwischen den beiden Trennringen geführt ist. Nach dem Abtrennen der Einzelstücke werden diese von den Formmulden aufgenommen und geformt. Beim weiteren Umlauf der Trennringe werden die vorgeformten Bonbons mittels der Prägestempel in die als Durchgangsbohrungen ausgebildeten Prägekammern des Prägekammerrings verschoben, wo das Prägen der Bonbons mittels der gegeneinander bewegten Prägestempel stattfindet. Anschließend werden die geprägten Bonbons mittels der Prägestempel auf eine Fördereinrichtung ausgeworfen.

In der Praxis werden die Prägestempel über eine Kurvensteuerung axial in Richtung der Trennringe und des Prägekammerringes bewegt oder von diesen wegbewegt, wobei an einem Punkt mit minimalem Abstand zwischen den Prägestempeln eine Prägekraft von einer Druckrolle mittels einer Stoßbewegung auf einen der Prägestempel aufgebracht wird. Danach fährt einer der Prägestempel wieder in seine Ausgangsstellung zurück und das Bonbon wird durch den anderen Prägestempel aus der Prägekammer geschoben und somit auf die Fördereinrichtung ausgeworfen. Hiernach fährt auch der das Auswerfen des Bonbons bewirkende Prägestempel wieder in seine Ausgangsstellung hinter den Trennringen zurück.

Von Praxisbeispielen ist es bekannt, die Kurvensteuerung für einen der Prägestempel mit einem topfartigen Körper zu realisieren, in dessen Umfangswandung die Kurvenbahn als Ausnehmung eingebracht ist. In dieser Kurvenbahn wird der zugeordnete Prägestempel, welcher mit dem Prägekammerring umläuft, bei seiner Umlaufbewegung mittels einer Kurvenrolle geführt, wobei im Bereich einer maximalen Verschiebung entgegen der Prägekammer Spielraum für eine Stoßbewegung seitens der Druckrolle in Richtung der Prägekammer gegeben ist.

Der gegenüberliegende Prägestempel wird bei aus der Praxis bekannten Anwendungsbeispielen mittels eines Taumelscheibenantriebs geführt, wobei die Kurvensteuerung des Prägestempels durch die Taumelbewegung der mit dem Prägestempel über ein Kugelgelenk verbundenen Taumelscheibe realisiert ist.

Nachteilhafterweise führt bei den bekannten Vorrichtungen bei hohen Prägegeschwindigkeiten die Stoßbelastung über die Druckrolle auf den angrenzenden Prägestempel zu sehr starken dynamischen Belastungen des Gesamtsystems. Über den Kraftfluss durch das zu prägende Bonbon auf die in der Regel pneumatisch vorgespannte Taumelscheibe wird die gesamte Apparatur in Schwingungen versetzt. Der Verschleiß, insbesondere an den Kurvenrollen und den Kurvenbahnen, ist während des Stoßes und beim Wiedereinfädeln der Kurvenrolle in die Kurvenbahn beträchtlich. Des Weiteren limitieren die dynamischen Stoßbelastungen die Rotationsgeschwindigkeit und somit die Ausstoßleistung der jeweiligen Vorrichtung und führen darüber hinaus zu sehr hohen Schallpegeln bei einem Prägevorgang.

Die US-A-1920445 offenbart eine Prägevorrichtung zum Formen aus einem Massestrang gefertigten Waren, insbesondere Bonbons mit zwei zueinander exzentrisch umlaufenden Trennringen, die jeweils Mulden und Trennstege aufweisen. Die Trennstege nähern sich beim Umlauf der Trennringe an und berühren sich, so dass Einzelstücke von dem Massestrang getrennt werden. Die Mulden werden jeweils von Stößeln betätigt, deren Enden unmittelbar entlang zweier feststehender Kurven geführt werden. Aus der US 2002/0192330 ist bereits eine Prägeeinrichtung, gemäss dem Oberbegriff des Anspruchs 1, insbesondere für gefüllten Kaugummi bekannt. Es sind hierzu Prägestempel vorgesehen, deren Enden über Kurvenrollen in Kurven bzw. einen Luftbalg geführt werden. Darüber hinaus ist im Prägebereich eine Prägerolle vorgesehen, die mit den Kurvenrollen zusammenwirken.

Es ist somit Aufgabe der vorliegenden Erfindung, eine Vorrichtung der eingangs genannten Art dahingehend weiterzubilden, dass insbesondere der Verschleiß vermindert und die Prägeleistung der Vorrichtung erhöht wird.

### Vorteile der Erfindung

Die erfindungsgemäße Vorrichtung zum Formen von aus einem Massestrang gefertigten Waren, insbesondere bonbonartigen Süßwaren, mit den Merkmalen des Anspruches 1 hat den Vorteil, dass sich die Prägung über einen vergleichsweise großen Umfangswinkel und somit über eine längere Zeitspanne erstreckt, so dass die hochviskose Masse des Einzelstückes mit geringerer Verformungsgeschwindigkeit und mit geringerem Kraftaufwand geformt werden kann.

Ein optimaler Prägeverlauf stellt sich dabei ein, wenn die Kurvenbahnen, entlang derer jeweils die Prägestempel eines Prägestempelpaares bei einem Umlauf um eine Achse eines zugeordneten, die Kurvenbahn eines Prägestempels vorgebenden Führungselementes bewegt werden, derart zueinander festgelegt sind, dass im Betrieb bei einem Umlauf in Folge einer Annäherung der Prägestempel die Prägung des Einzelstückes in einem Umfangswinkelbereich von wenigstens annähernd 12° bis 15° vor einem Punkt minimalen Abstandes zwischen den Prägestempeln beginnt und in einem Umfangswinkelbereich von wenigstens annähernd 0° bis 5° nach dem Punkt minimalen Abstandes zwischen den Prägestempeln endet.

Durch die spezielle Abstimmung des Verlaufes der Kurvenbahnen zueinander im Hinblick auf einen optimalen Druckkraftverlauf während des Prägevorganges kann die Prägung ohne die Aufbringung einer Stoßkraft beispielsweise seitens einer Druckrolle durchgeführt werden, womit vorteilhafterweise nicht nur die Bauteilvielzahl reduziert wird, sondern auch eine Störung der Kurvenbahn im Bereich einer Druckrolle und die von dieser ausgehenden verschleiß- und schallwirksamen dynamischen Kräfte vermieden werden. Da der Prägevorgang bei einer erfindungsgemäß ausgestalteten Vorrichtung ohne dynamische Stoßbelastungen erfolgt, können Schwingungen in der Vorrichtung vermieden werden und höhere Prägeleistungen bei gleicher Belastung erzielt werden.

Bei einer besonders vorteilhaften Ausführung der erfindungsgemäßen Vorrichtung weist das Führungselement wenigstens der auf einer Seite der Prägekammern angeordneten Prägestempel feststehende Ringkörper auf, deren Kontur und axialer Abstand zueinander die Kurvenbahn hierin geführter Prägestempel bildet.

Derartige Ringkörper, welche auch eine Art Topf bilden können, ermöglichen eine kostengünstige und robuste Realisierung einer Kurvenbahn als Gleitbahn, wobei es vorteilhaft ist, wenn ein Prägestempel in der Kurvenbahn mittels einer Führungsrolle geführt ist, welche an einem Achselement gelagert ist, welches im Wesentlichen senkrecht zu einer Längsachse des Prägestempel von einem Prägestempelschaft wegkragt.

Grundsätzlich können zur Führung beider Prägestempel eines Prägestempelpaares, von denen in der Regel eine Vielzahl trommelartig in einem Kreis um eine Drehachse des Führungselementes angeordnet ist, auf beiden Seiten der Prägekammern Führungselemente vorgesehen seien, die die entsprechende Kurvenbahn durch feststehende Ringkörper bilden.

In einer vorteilhafter Ausgestaltungsvariante ist das Führungselement der auf einer der Seiten der Prägekammern angeordneten Prägestempel mit feststehenden Ringkörpern ausgebildet und das Führungselement der auf der anderen Seite der Prägekammern angeordneten Prägestempel als eine Taumelscheibe ausgebildet.

Der Einsatz einer solchen Taumelscheibe hat sich in der Praxis bewährt, wobei die Taumelscheibe vorzugsweise federnd gelagert ist und beispielsweise eine pneumatische Vorspannung aufweist, so dass diese bei einer zu starken Befüllung der Prägekammer dem hier seitens der Prägekammer ausgeübten Druck nachgeben kann.

Die Führung von Prägestempeln mittels einer in der Regel eine Sinuskurve beschreibenden Taumelscheibe ist auf einfache Art und Weise möglich, indem ein Prägestempelschaft über ein Kugelgelenk mit der Taumelscheibe drehbar verbunden wird.

Zur Erzielung eines hochwertigen Prägeergebnisses können die Kurvenbahnen der beiderseitigen Führungselemente derart vorgegeben sein, dass die Abstandsdifferenz zwischen den Prägestempeln über den Umfangswinkel zwischen dem Punkt des Beginns der Prägung des von dem Massestrang abgetrennten Einzelstückes und dem Punkt minimalen Abstandes zwischen den Prägestempeln in einem Bereich von 0,1 mm und 0,7 mm, insbesondere zwischen 0,3 mm und 0,5 mm, liegt.

Weitere Vorteile und vorteilhafte Ausgestaltungen des Gegenstandes nach der Erfindung sind der Beschreibung, der Zeichnung und den Patentansprüchen entnehmbar.

### Zeichnung

Ein Ausführungsbeispiel des erfindungsgemäßen Gegenstandes ist in der Zeichnung schematisch vereinfacht dargestellt und wird in der nachfolgenden Beschreibung näher erläutert. Es zeigen:
Figur 1 eine erfindungsgemäße Vorrichtung zum Prägen von aus einem Massestrang gefertigten Bonbons oder dergleichen in einem vereinfachten Querschnitt;
Figur 2 eine vereinfachte perspektivische Darstellung von Einzelelementen der Vorrichtung der Figur 1;
Figur 3 eine Draufsicht auf einen Ausschnitt einer Kurvenbahn mit einer Kurvenrolle eines Prägestempels der Vorrichtung der Figur 1; und
Figur 4 ein Diagramm, welches den Abstand zwischen den ein Prägestempelpaar bildenden Prägestempeln bei einem Prägeverlauf wiedergibt.

### Beschreibung des Ausführungsbeispiels

In den Figuren ist eine Vorrichtung 10 dargestellt, welche zum Abtrennen und Prägen von Bonbons 1 von einem ausgewalzten und ausgezogenen, insbesondere mit einem flüssigen oder halbflüssigen Füllgut 3 gefüllten Massestrang 2 dient. Bei den Bonbons 1 handelt es sich vorliegend um so genannte Karamellen, gleich die gezeigte Vorrichtung 10 auch zum Formen jedweder anderer Süßwaren einschließlich Kaugummistücken Anwendung finden kann.

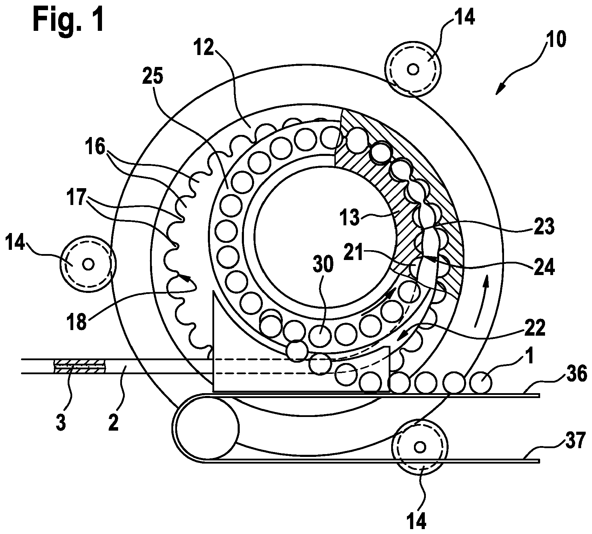

Wie besonders deutlich der Figur 1 zu entnehmen ist, weist die Vorrichtung 10 einen ersten, äußeren Trennring bzw. Messerring 12 auf, der mit einem zweiten, inneren Trennring 13 zusammenwirkt. Der äußere Trennring 12 ist an seinem Außenumfang mittels drei Rollen 14 gelagert. Der äußere Trennring 12 weist an seiner inneren Umfangsfläche halbrund ausgeformte Formmulden 16 auf, die unmittelbar aneinander anschließen. Im Übergangsbereich zwischen den Formmulden 16 sind Trennstege 17 ausgebildet, die über die gesamte Breite der entsprechenden Formmulden 16 reichen. Die Trennstege 17 dienen zum Abtrennen der Bonbons 1 von dem Massestrang 2, wozu die Trennstege 17 Schnittkanten 18 aufweisen.

Der innere Trennring 13 ist exzentrisch innerhalb des äußeren Trennringes 12 gelagert und wird mittels eines nicht näher dargestellten Antriebes ebenfalls im Gegenuhrzeigersinn kontinuierlich angetrieben. Der innere Trennring 13 weist ebenfalls halbrund ausgebildete Formmulden 21 auf, die beim Umlauf des inneren Trennrings 13 mit den Formmulden 16 des äußeren Trennrings 12 zusammenwirken. Der Durchmesser, die Drehzahl sowie die Anordnung der Formmulden 21 des inneren Trennrings 13 sind derart auf den äußeren Trennring 12 abgestimmt, dass bei einem Umlauf der beiden Trennringe 12, 13 der in einen Bereich 22 zwischen die beiden Trennringe 12, 13 zugeführte Massestrang 2 bei einer Annäherung der beiden Trennringe 12, 13 sowie der entsprechenden Formmulden 16, 21 in den Bereich zwischen die Formmulden 16, 21 gerät.

Der innere Trennring 13 weist im Übergangsbereich zwischen seinen Formmulden 21 ebenfalls Trennstege 23 mit Schnittkanten 24 auf, deren Form den Schnittkanten 18 des äußeren Trennrings 12 angepasst ist. In Folge der Annäherung der beiden Trennringe 12, 13 bei deren Umlauf geraten die einander gegenüber liegenden Schnittkanten 18, 24 der jeweiligen Trennstege 17, 23 in Kontakt, wobei die Bonbons 1 als Einzelstücke von dem Massestrang 2 vollständig abgetrennt werden. An den inneren Trennring 13 schließt sich seitlich ein koaxial angeordneter Prägekammerring 25 an, welcher hier einstückig mit dem inneren Trennring 13 ausgeführt ist.

Der Prägekammerring 25 weist als Durchgangsbohrungen ausgebildete Prägekammern 30 auf, welche mit den Formmulden 21 des inneren Trennrings 13 fluchten. Beidseits dieser parallel zur Drehachse des Prägekammerrings 25 angeordneten, beidseitig offenen Prägekammern 25 sind zum Prägen eines von dem Massestrang 2 abgetrennten Bonbons 1 Prägestempel 31, 32 vorgesehen, wobei je zwei ein Prägestempelpaar 33 bildende Prägestempel 31, 32 zu einer der Prägekammern 30 fluchten und in diese verschiebbar sind.

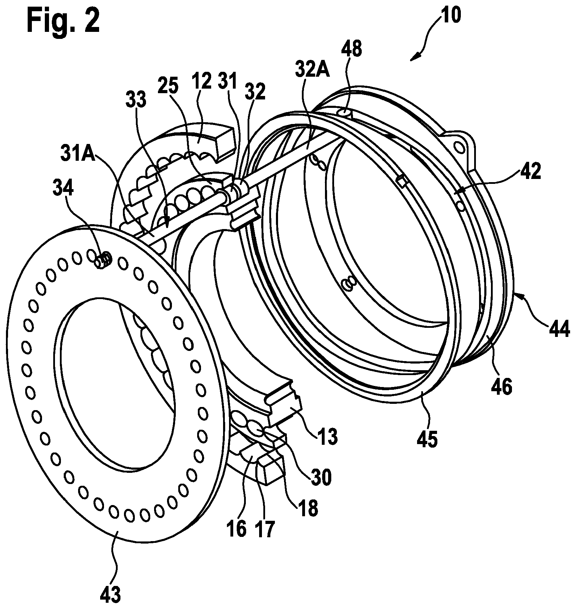

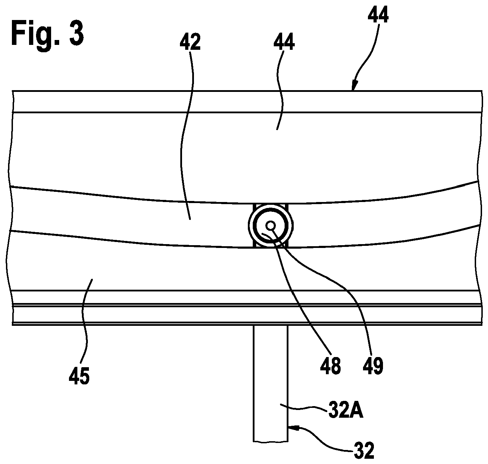

Wie die Figuren 2 bis 4 näher zeigen, sind die Prägestempel 31, 32 über eine Kurvensteuerung angetrieben und senkrecht zur Zeichenebene der Figur 1 beim Umlauf des inneren Trennringes 13 bewegbar. Auf der den Trennstegen 23 zugewandten Seite können die Prägestempel 31, 32 eine gewölbte Form aufweisen, die der gewünschten Prägung bzw. Formgebung des Bonbons 1 angepasst ist.

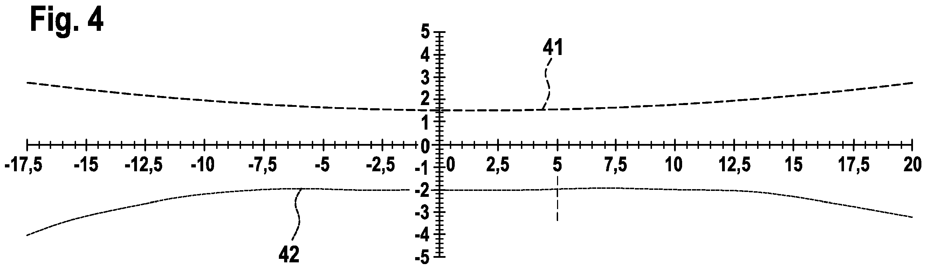

Die paarweise zusammenwirkenden Prägestempel 31, 32 werden jeweils entlang einer Kurvenbahn 41, 42 geführt, deren Verlauf über einen Teil des Umfangwinkels näher in Figur 4 dargestellt ist. Die Kurvenbahn 41, 42 wird dabei jeweils von einem Führungselement 43 bzw. 44 vorgegeben.

Wie die exemplarische Darstellung eines Prägestempelpaares 33 von insgesamt 35 bei der gezeigten Ausführung vorhandenen Prägestempelpaaren in Figur 2 zeigt, ist das Führungselement 43 eines ersten Prägestempels 31 des Prägestempelpaares 33 als eine Taumelscheibe 43 ausgebildet, welche bei ihrer Drehung eine sinusförmige Taumelbewegung ausführt und vorliegend in Axialrichtung pneumatisch gefedert gelagert ist. Die Taumelscheibe 43 ist mit dem zugeordneten Prägestempel 31 bzw. einem sich entlang einer Längsachse des Prägestempels 31 erstreckenden Prägestempelschaft 31A mittels eines Kugelgelenks 34 querverschiebbar verbunden.

Der gegenüberliegende Prägestempel 32 des Prägestempelpaares 33 wird von einem durch Ringkörper 45, 46 gebildeten Führungselement 44 geführt, wobei diese Ringkörper 45, 46 feststehen und mit ihrer Kontur am Umfang sowie ihrem axialen Abstand zueinander die eine Gleitbahn darstellende Kurvenbahn 42 ausbilden, in der der Prägestempel 32 des Prägestempelpaares 33 gleitet. Der Prägestempel 32 ist hierbei in der Kurvenbahn 42 zwischen den Ringkörpern 45 und 46, von denen der näher an dem Prägekammerring 25 angeordnete Ringkörper 45 eine Rückstreifkurve der weiter entfernt von dem Prägekammerring 25 angeordnete Ringkörper 46 eine Druckkurve für den Prägestempel 32 im Bereich der Kurvenbahn 42 bildet, mittels einer Führungsrolle 48 geführt. Die Führungsrolle 48 ist an einem Achselement 49 gelagert, welches senkrecht zu einer Längsachse des Prägestempels 32 von einem Prägestempelschaft 32A wegkragt.

Entlang der Kurvenbahnen 41, 42, welche mit axial vor- und zurückweichenden Bereichen die axiale Verschiebebewegung der Prägestempel 31, 32 steuern, werden die Prägestempel 31, 32 jedes Prägestempelpaares 33 zunächst aus einer zurückgezogenen Stellung gegen die zugehörige Prägekammer 30 bewegt, wobei der den äußeren Trennring 12 querende, ringkörperseitige Prägestempel 32 einen von den Trennstegen 17, 23 vom Massestrang 2 abgetrennten Rohling eines Einzelstückes 1 eines Bonbons in die Prägekammer 30 einbringt, in der jeweils ein Prägestempelpaar 33 das Einzelstück 1 von zwei Seiten verpresst.

Nach dem Pressvorgang kehrt der taumelscheibenseitige Prägestempel 31 in seine Ausgangsstellung zurück, während der gegenüberliegende Prägestempel 32 noch weiter vorgetrieben wird, so dass er das fertig geformte Bonbon 1 aus der Prägekammer 30 auswirft. Beim Auswurf aus der Prägekammer 30 gelangt das Bonbon schließlich auf ein Fördertrum 36 einer kontinuierlich angetriebenen Fördereinrichtung 37 im unteren Bereich der Vorrichtung 10.

Besonders anhand des Diagramms der Figur 4, welches einen Stempelabstand D in Millimetern über den Einsatzdrehwinkel bzw. Umfangswinkel ϕ zeigt, ist die Abstimmung der Kurvenbahnen 41, 42 zueinander ersichtlich, welche so ausgelegt sind, dass bei einem Umlauf um eine Achse des zugeordneten die Kurvenbahn 41, 42 vorgebenden Führungselementes 43 bzw. 44 in Folge einer Annäherung der Prägestempel 31, 32 die Prägung des Einzelstückes bzw. Bonbons 1 in einem Umfangswinkelbereich von wenigstens annähernd 12° bis 15° vor einem Punkt D_min minimalen Abstandes zwischen den Prägestempeln 31, 32 beginnt und in einem Umfangswinkelbereich von wenigstens annähernd 0° bis 15° nach dem Punkt D_min minimalen Abstandes zwischen den Prägestempeln endet.

Als Prägen wird dabei die Endformung eines Bonbons 1 verstanden, bei dem die Abstandsdifferenz D zwischen den Prägestempeln 31, 32 über den Umfangswinkel ϕ zwischen dem Punkt des Beginns der Prägung des Bonbons 1 und dem Punkt D_min minimalen Abstandes zwischen den Prägestempeln 31, 32 zwischen 0,1 mm und 0,7 mm betragen kann. Bei der gezeigten Ausführung beträgt die Abstandsdifferenz D zwischen den Prägestempeln 31, 32 während der Prägephase zwischen 0,3 mm und 0,5 mm.

Der Punkt D_min minimalen Abstandes zwischen den Prägestempeln 31, 32 liegt bei der vorliegenden Ausführung circa 5° nach einem Scheitelpunkt bzw. einer 12-Uhr-Stelle der Taumelscheibe 43 in einem Bereich geringster Relativbewegung. Das Bonbon 1 wird dabei symmetrisch um den Scheitelpunkt der Taumelscheibe geprägt, um zu vermeiden, dass das Bonbon 1 unter Druck in der Prägekammer 30 geschoben wird und hierdurch gegebenenfalls ankleben kann. Ziel der Kurvenführung ist es, den Scheitelpunkt der Taumelscheibe 43 so dicht wie möglich zu umgehen und eine vergleichsweise ruhige Lage des taumelseitigen Prägestempels 31 zu nutzen, weshalb hier eine asymptotische Annäherung des ringkörperseitigen Prägestempels 32 symmetrisch zum Scheitelpunkt der Taumelscheibe 43 gewählt ist.

Bei dem gezeigten Prägeverlauf, bei dem der ringkörperseitige Prägestempel 32 bereits zwischen -10° und -5° so nah gegen den taumelscheibenseitigen Prägestempel 31 geführt wird, dass das Bonbon 1 bereits geformt wird, bei dem zwischen -7,5° und +7,5° die Kurvenbahn 42 des ringkörperseitigen Prägestempels 32 der Kurvenbahn 41 des taumelscheibenseitigen Prägestempels 31 folgt, und bei dem bei +5° der Punkt D minimalen Abstandes zwischen den Prägestempeln 31, 32 und das Ende der Prägung erreicht ist, wird durch den langen Winkelweg und den Kurvenverlauf die Formungsgeschwindigkeit des Bonbons 1 immer weiter verringert, damit mit möglichst konstanter Verformungskraft über einen großen Prägebereich von circa 15° das Bonbon 1 fertig geprägt werden kann. Die gesamte Verformungskraft für das Ausprägen des Bonbons 1 zwischen den Prägestempeln 31, 32 wird dabei über deren Führung entlang der Kurvenbahnen 41, 42 ohne zusätzliche Stoßbewegung aufgebracht.

Es wird somit ein optimaler Druckkraftverlauf während des Prägevorgangs innerhalb eines Bereichs von circa +/-7,5° um den Scheitelpunkt der Taumelscheibe 43 eingestellt, wobei ein Abheben der Taumelscheibe 43 gegen die elastische Vorspannung aufgrund lokaler Kraftspitzen verhindert wird.

Nachdem in dem Punkt D_min minimalen Abstandes zwischen den Prägestempeln 31, 32 ein sogenannter Prägepunkt erreicht wird, entfernen sich bei weiterem Umlauf der Trennringe 12, 13 die Prägestempel 31, 32 voneinander, wobei der taumelscheibenseitige Prägestempel 31 entlang der Kurvenbahn 42 in seine Ausgangsstellung zurückgefahren wird und der ringkörperseitige Prägestempel 32 das Auswerfen des Bonbons 1 aus dem Prägekammerring 30 annähernd an einer 8-Uhr-Stelle der Taumelscheibe 43 bewirkt, bevor auch dieser Prägestempel 32 wieder in seine Ausgangsstellung hinter den Trennringen 12, 13 zurückgezogen wird.

## Patentansprüche

1. Vorrichtung zum Formen von aus einem Massestrang (2) gefertigten Waren, insbesondere bonbonartigen Süßwaren, mit zwei zueinander exzentrisch umlaufenden Trennringen (12, 13), deren jeder Mulden (16, 21) und Trennstege (17, 23) aufweist, wobei sich die Trenhstege (17, 23) beim Umlauf der Trennringe (12, 13) annähern und Einzelstücke (1) von dem Massestrang (2) abtrennend berühren, und mit einem umlaufenden Prägekammerring (25) mit beidseitig offenen Prägekammern (30), in die jeweils zum Prägen eines abgetrennten Einzelstückes (1) zwei beiderseits einer Prägekammer (30) angeordnete, ein Prägestempelpaar (33) bildende Prägestempel (31, 32) verschiebbar sind, wobei die Prägestempel (31, 32) jeweils mittels einer Kurvensteuerung angetrieben sind, wobei die Kurvenbahnen (41, 42), entlang derer jeweils die Prägestempel (31, 32) eines Prägestempelpaares (33) bei einem Umlauf um eine Achse eines zugeordneten, die Kurvenbahn (41, 42) vorgebenden Führungselementes (43, 44) bewegt werden, derart zueinander festgelegt sind, dass bei einem Umlauf in Folge einer Annäherung der Prägestempel (31, 32) die Prägung eines Einzelstückes (1) in einem Umfangswinkelbereich von wenigstens annähernd 12° bis 15° vor einem Punkt (D_min) minimalen Abstandes zwischen den Prägestempeln (31, 32) beginnt und in einem Umfangswinkelbereich von wenigstens annähernd 0° bis 5° nach dem Punkt (D_min) minimalen Abstandes zwischen den Prägestempeln (31, 32) endet, wobei das Führungselement (44) wenigstens der auf einer Seite der Prägekammern (30) angeordneten Prägestempel (32) feststehende Ringkörper (45, 46) aufweist, deren Kontur und axialer Abstand zueinander die Kurvenbahn (42) hierhin geführter Prägestempel (32) bildet, **dadurch gekennzeichnet, dass** ein Prägestempel (32) in der Kurvenbahn (42) mittels einer Führungsrolle (48) geführt ist, welche an einem Achselement (49) gelagert ist, welches im Wesentlichen senkrecht zu einer Längsachse des Prägestempels (32) von einem Prägestempelschaft (32A) wegkragt, wobei das Führungselement der auf einer der Seiten der Prägekammern (30) angeordneten Prägestempel (31) als eine Taumelscheibe (43) ausgebildet ist, wobei der Punkt (D_min) minimalen Abstandes zwischen den Prägestempeln (31, 32) wenigstens annähernd 5° nach einem Scheitelpunkt der Taumelscheibe (43) liegt, wobei die Prägung ohne Aufbringung einer Stoßkraft beispielsweise seitens einer Druckrolle durchgeführt wird, indem der Prägestempel (32) in der Kurvenbahn (42)zwischen dem Ringkörper (45, 46), von denen der näher am Prägekammerring (25) angeordnete Ringkörper (45) eine Rückstreifkurve und der weiter entfernt von dem Prägekammerring (25) angeordnete Ringkörper (46) eine Druckkurve für den Prägestempel (32) im Bereich der Kurvenbahn (42) bildet, mittels der Führungsrolle (48) geführt ist.

2. Vorrichtung nach Anspruch 1, **dadurch gekennzeichnet, dass** die Taumelscheibe (43) mit einem Prägestempel (31) mittels eines Kugelgelenks (34) verbunden ist.

3. Vorrichtung nach einem der Ansprüche 1 bis 2, **dadurch gekennzeichnet, dass** die Kurvenbahnen (41, 42) derart vorgegeben sind, dass die Abstandsdifferenz (D) zwischen den Prägestempeln (31, 32) über den Umfangswinkel (6) zwischen dem Punkt des Beginns der Prägung des Einzelstückes (1) und dem Punkt (D_min) minimalen Abstandes zwischen den Prägestempeln (31, 32) zwischen 0,1 mm und 0,7 mm, insbesondere zwischen 0,3 mm und 0,5 mm, beträgt.

## Claims

1. Device for shaping products, in particular confectionery-type sweets, made from a mass strand (2), having two mutually eccentrically revolving annular separators (12, 13), each thereof having troughs (16, 21) and separation webs (17, 23), wherein the separation webs (17, 23) converge as the annular separators (12, 13) revolve and contact individual pieces (1) so as to separate the latter from the mass strand (2), and having a revolving annular embossing chamber (25) having embossing chambers (30) that are open towards both sides and in each of which, for embossing a severed individual piece (1), two embossing tools (31, 32) that are disposed on either side of an embossing chamber (30) so as to form one embossing-tool pair (33) are displaceable, wherein the embossing tools (31, 32) each are driven by means of a cam control, wherein the cam tracks (41, 42) along each of which the embossing tools (31, 32) of an embossing-tool pair (33) are moved when revolving about an axis of an assigned guide element (43, 44) that defines the cam track (41, 42) are mutually fixed in such a manner that in the case of one revolution, as a result of a convergence of the embossing tools (31, 32), embossing of an individual piece (1) commences in a circumferential angular range of at least approximately 12° to 15° ahead of a point (D_min) of a minimum spacing between the embossing tools (31, 32) and terminates in a circumferential angular range of at least approximately 0° to 5° behind the point (D_min) of minimum spacing between the embossing tools (31, 32), wherein the guide element (44) of at least the embossing tools (32) that are disposed on one side of the embossing chambers (30) has stationary annular bodies (45, 46) of which the contour and the mutual axial spacing form the cam track (42) of embossing tools (32) that are guided hereto, **characterized in that** an embossing tool (32) in the cam track (42) is guided by means of a guide roller (48) which is mounted on an axle element (49) which protrudes from an embossing-tool shaft (32A) in a substantially perpendicular manner to a longitudinal axis of the embossing tool (32), wherein the guide element of the embossing tools (31) that are disposed on one of the sides of the embossing chambers (30) is configured as a swashplate (43), wherein the point (D_min) of minimum spacing between the embossing tools (31, 32) lies at least approximately 5° behind an apex of the swashplate (43), wherein embossing is performed without applying an impact force, for example by a pressure roller, **in that** the embossing tool (32) in the cam track (42) between the annular body (45, 46), of which the annular body (45) that is proximate to the annular embossing chamber (25) forms a relief curve, and the annular body (46) that is distal from the annular embossing chamber (25) forms a compression curve for the embossing tool (32) in the region of the cam track (42), by means of which cam track the guide roller (48) is guided.

2. Device according to Claim 1, **characterized in that** the swashplate (43) is connected to an embossing tool (31) by means of a ball joint (34).

3. Device according to one of Claims 1 to 2, **characterized in that** the cam tracks (41, 42) are defined in such a manner that the spacing differential (D) between the embossing tools (31, 32) across the circumferential angle (6) between the point of commencement of embossing of the individual piece (1), and the point (D_min) of minimum spacing between the embossing tools (31, 32), is between 0.1 mm and 0.7 mm, in particular between 0.3 mm and 0.5 mm.

## Revendications

1. Dispositif pour former des produits fabriqués à partir d'un boudin de matière (2), en particulier des sucreries de type bonbon, avec deux anneaux de séparation (12, 13) tournant de façon excentrique l'un par rapport à l'autre, dont chacun présente des moules (16, 21) et des nervures de séparation (17, 23), dans lequel les nervures de séparation (17, 23) se rapprochent lors de la rotation des anneaux de séparation (12, 13) et se touchent en détachant des pièces individuelles (1) du boudin de matière (2), et avec un anneau tournant avec des chambres de gaufrage (25) présentant des chambres de gaufrage ouvertes des deux côtés (30), dans lesquelles deux poinçons de gaufrage (31, 32) disposés de part et d'autre d'une chambre de gaufrage (30) et formant une paire de poinçons de gaufrage (33) peuvent être poussés pour gaufrer respectivement une pièce individuelle détachée (1), dans lequel les poinçons de gaufrage (31, 32) sont entraînés respectivement au moyen d'une commande par came, dans lequel les pistes de came (41, 42), le long desquelles les poinçons de gaufrage (31, 32) d'une paire de poinçons de gaufrage (33) sont respectivement déplacés lors d'une rotation autour d'un axe d'un élément de guidage (43, 44) associé définissant la piste de came (41, 42), sont calées l'une par rapport à l'autre de telle manière que lors d'une rotation, suite à un rapprochement des poinçons de gaufrage (31, 32), le gaufrage d'une pièce individuelle (1) commence dans une région d'angle périphérique d'au moins approximativement 12° à 15° avant un point (D_min) de distance minimale entre les poinçons de gaufrage (31, 32) et se termine dans une région d'angle périphérique d'au moins approximativement 0° à 5° après le point (D_min) de distance minimale entre les poinçons de gaufrage (31, 32), dans lequel l'élément de guidage (44) au moins des poinçons de gaufrage (32) disposés sur un côté des chambres de gaufrage (30) présente des corps annulaires fixes (45, 46), dont le contour et la distance axiale l'un par rapport à l'autre forment la piste de came (42) des poinçons de gaufrage (32) guidés dans celles-ci, **caractérisé en ce qu'**un poinçon de gaufrage (32) est guidé dans la piste de came (42) au moyen d'un galet de guidage (48), qui est monté sur un élément d'axe (49), qui est saillant à partir d'un arbre de poinçon de gaufrage (32A) de façon essentiellement perpendiculaire à un axe longitudinal du poinçon de gaufrage (32), dans lequel l'élément de guidage des poinçons de gaufrage (31) disposés sur un des côtés des chambres de gaufrage (30) est réalisé en forme de plateau oscillant (43), dans lequel le point (D_min) de distance minimale entre les poinçons de gaufrage (31, 32) est situé au moins approximativement 5° après un sommet du plateau oscillant (43), dans lequel le gaufrage est effectué sans application d'une force d'impact par exemple de la part d'un rouleau de pression, du fait que le poinçon de gaufrage (32) est guidé au moyen du galet de guidage (48) dans la piste de came (42) entre le corps annulaire (45, 46), dont le corps annulaire (45) disposé plus près de l'anneau à chambres de gaufrage (25) forme une courbe d'égalisation et le corps annulaire (46) situé plus loin de l'anneau à chambre de gaufrage (25) forme une courbe de pression pour le poinçon de gaufrage (32) dans la région de la piste de came (42).

2. Dispositif selon la revendication 1, **caractérisé en ce que** le plateau oscillant (43) est relié à un poinçon de gaufrage (31) au moyen d'une rotule (34).

3. Dispositif selon une des revendications 1 à 2, **caractérisé en ce que** les pistes de came (41, 42) sont définies de telle manière que la différence de distance (D) entre les poinçons de gaufrage (31, 32) sur l'angle périphérique (6) entre le point de commencement du gaufrage de la pièce individuelle (1) et le point (D_min) de distance minimale entre les poinçons de gaufrage (31, 32) vaille entre 0,1 mm et 0,7 mm, en particulier entre 0,3 mm et 0,5 mm.
